# EUROPEAN PATENT SPECIFICATION

(11) **EP 4 386 653 B1**
(45) Date of publication and mention of the grant of the patent: **14.10.2026**
(21) Application number: 23215983.0
(22) Date of filing: 12.12.2023
(51) Int. Cl.: G06Q 30/0601, H04N 21/80, H04N 21/4725, H04N 21/478

(54) **PLACING ORDERS FOR A SUBJECT INCLUDED IN A MULTIMEDIA SEGMENT**
STELLEN VON AUFTRÄGEN FÜR EINE PERSON IN EINEM MULTIMEDIASEGMENT
PLACEMENT DE COMMANDES POUR UN SUJET INCLUS DANS UN SEGMENT MULTIMÉDIA

(30) Priority: 12.12.2022 US 202218079204
(43) Date of publication of application: 19.06.2024
(73) Proprietor: Roku, Inc., San Jose, CA 95110 (US)
(72) Inventor: ZHANG, Ping, San Jose, 95110 (US); KUMAR, Sharada Palasamudram Ashok, San Jose, 95110 (US)
(74) Representative: Mewburn Ellis LLP

(56) References cited:
- US-A1- 2012 304 065
- US-A1- 2015 245 103
- US-A1- 2021 217 077

## Description

### BACKGROUND

### FIELD

This disclosure is generally directed to commerce including commerce conducted based on multimedia technology.

### BACKGROUND

Commerce refers to the activity of buying and selling, which is fundamental to the society throughout the human history. A technology can change the way commerce is conducted. For example, using television (TV), a consumer can watch TV while calling by phone to place orders for items in a shopping channel of TV programs. With the advance of computer technology, e-commerce has fundamentally changed the way commerce is conducted. However, it is still desired to improve the efficiency of commerce with current technologies.

US2021/217077A1 discloses systems/methods for identifying products within audio-visual content and enabling seamless purchasing of such identified products by viewers/users of the audio-visual content.

US2012/0304065A1 discloses determining information associated with online videos.

US 2015/245103 A1 (CONTE MICHAEL V [FR]) of 27. August 2015 discloses a system to mark purchasable items in a video stream.

### SUMMARY

According to a first aspect of the present invention there is provided a method as specified in claim 1. The method may optionally be as specified in any of claims 2 to 7.

According to a second aspect of the present invention there is provided a content server as specified in claim 8. The content server may optionally be as specified in

According to a third aspect of the present invention there is provided a non-transitory computer-readable medium as specified in claim 13. The non-transitory computer-readable medium may optionally be as specified in claim 14 or claim 15.

An example embodiment of a multimedia environment includes one or more of a display device, a mobile device, a content server, and a media device, among which any device may be referred to as a computing device. A multimedia environment can be coupled to a third party shopping device. A computing device can capture a frame of a multimedia segment, where the frame includes a subject. In some embodiments, the frame can be captured by an application software operating on a mobile device. In some embodiments, the computing device can display live the multimedia segment including the frame on a display device before capturing the frame. In some embodiments, the computing device can perform a sequence of operations to capture the frame. The sequence of operations can include optionally pausing the live displaying of the multimedia segment on the display device, recording a subsequent portion of the multimedia segment while the frame of the multimedia segment is being captured, and resuming the live displaying of the multimedia segment including the recorded subsequent portion of the multimedia segment.

The computing device can further determine that the subject corresponds to a marked subject having a mark included in a marked frame and associated with the subject to indicate the subject is ready for purchase. In some embodiments, the mark included in the marked subject can include a graphically visible mark to indicate the subject is ready for purchase. In some embodiments, the computing device can send the captured frame of the multimedia segment to a content server, and receive the marked frame from the content server, where the marked frame includes the marked subject having the mark associated with the subject.

Afterward, the computing device can determine an indication related to the marked subject to place an order for the subject. In some embodiments, the indication to place the order for the subject includes an indication of a location of the marked subject being selected by the user. In response to the indication to place the order for the subject, the computing device can collect information included in the order, where the information included in the order can include information about a user and information about the subject. The computing device can further transmit to a third party shopping system, at least a portion of the order. In some embodiments, the computing device can launch the third party shopping system by a hyperlink address or a quick response (QR) code. In some embodiments, the order can be recorded in a user shopping account managed by the third party shopping system, where the user shopping account corresponds to a media account associated with the computing device. In addition, the computing device can facilitate a payment for the order based on information associated with the media account.

In some embodiments, the subject can be a first subject, the marked subject can be a first marked subject having a first mark, and the frame can further include a second subject. In addition, the computing device can determine the second subject corresponds to a second marked subject having a second mark included in the marked frame and associated with the second subject to indicate the second subject is ready for purchase. The computing device can further determine, based on a selection signal related to the first marked subject and the second marked subject, a selected subject which is selected from the first subject or the second subject to place an order for purchase. Afterwards, the computing device can collect information included in the order, where the information included in the order includes information about the user and information about the selected subject.

In some embodiments, a computing device, such as a content server, can receive a frame of a multimedia segment, where the frame can include a subject, and analyze the frame to determine that the subject included in the frame is ready for purchase. In order to analyze the frame to determine that the subject is ready for purchase, the content server can extract information about the subject from the frame, identify that the subject is ready for purchase based on the extracted information and a database storing information related to purchasable subjects, and generate a mark associated with the subject to produce a marked subject to indicate the subject is ready for purchase. In some embodiments, to generate the mark associated with the subject, the content server can detect border location coordinates of an original border of the subject within the frame; and generate as the mark, at the location coordinates, a highlighted border visibly different from the original border of the subject.

In some embodiments, the content server can further generate a marked frame including the marked subject, and transmit the marked frame including the marked subject to a media device, where the marked frame is to be displayed on a display device to indicate the subject is ready for purchase. In some embodiments, the content server can receive, from the media device, an indication for an order to purchase the subject. The content server can also determine one or more third party shopping systems to fulfill the order to purchase the subject, and transmit to the media device an indication of the one or more third party shopping systems. In some embodiments, the indication of the one or more third party shopping systems can include a quick response (QR) code transmitted to the media device.

### BRIEF DESCRIPTION OF THE FIGURES

The accompanying drawings are incorporated herein and form a part of the specification.
FIG. 1 illustrates a block diagram of a multimedia environment, according to some embodiments.
FIG. 2 illustrates a block diagram of a streaming media device, according to some embodiments.
FIG. 3 illustrates an example multimedia environment for placing an order for a subject included in a frame of a multimedia segment, according to some embodiments.
FIGS. 4A-4B illustrate example processes for placing an order for a subject included in a frame of a multimedia segment, according to some embodiments.
FIG. 5 illustrates an example computer system useful for implementing various embodiments.

In the drawings, like reference numbers generally indicate identical or similar elements. Additionally, generally, the left-most digit(s) of a reference number identifies the drawing in which the reference number first appears.

### DETAILED DESCRIPTION

Commerce refers to the activity of buying and selling, which is fundamental to the society throughout the human history. A technology can change the way commerce is conducted. For example, using television (TV), a consumer can watch TV while placing orders by phone for items in a shopping channel. With the advance of computer technology, e-commerce has fundamentally changed the way commerce is conducted. For example, some companies may operate a website to sell many kinds of merchandises. However, selling subjects through websites is mostly based on text and static representation of the subject, which can limit the representation of information related to the subject. In addition, access to the website may be limited by the availability of a web browser the buyer has to use to browse the website and buy the subject. Live streaming of influencers may sell subjects in real-time over the stream media. However, the real-time selling may also limit the access of the consumers since the consumers have to watch the selling activities based on the seller's schedule.

One trend shaping advertising is the rapid rise of streaming video viewership. A new medium known as over-the-top (OTT) advertising has emerged, allowing brands to reach their audiences directly within their living rooms. T-Commerce is a term describing buying and selling activities via smart digital TV-set that can act as a marketing channel in addition to its main functionality of displaying media content. T-Commerce can use a media system to enable bidirectional communication, interactive advertising and addressable advertising. Efficient methods to control a computing device to place an order through a media system for an advertised subject provided by a third party shopping system is desired.

Embodiments herein present live commerce providing a more flexible platform, which can also be viewed as an efficient implementation of T-commerce. Instead of using an advertisement which is separated from media content, embodiments herein enable a subject in a media content such as a multimedia segment to become a marked subject with a mark indicating the subject is purchasable. Hence, embodiments herein effectively merge an advertisement for a product or service related to a subject with the media content which may be created by a content creator.

An example embodiment of a multimedia environment for live commerce can include a computing device such as a media device, a content server, or a mobile device used by a consumer. When media content, such as a multimedia segment, is originally generated by a content creator, the multimedia segment may contain one or more subjects in a frame of the multimedia segment. The one or more subjects may not be an advertisement or contain commercial information when they are created in the media content. In order to improve the efficiency of live commerce or T-commerce, a computing device, such as a media device or a content server, or any other computing device, can turn a subject contained in a frame of the multimedia segment into an advertised subject which is an advertisement for the subject. In addition, the computing device can further enable communication with a third party shopping systems to place an order to purchase the subject.

In detail, the computing device can capture a frame of the multimedia segment, where the frame includes a subject. The computing device can further extract information about the subject from the frame, identify that the subject is ready for purchase based on the extracted information and a database storing information related to purchasable subjects, and generate a mark associated with the subject to produce a marked subject to indicate the subject is ready for purchase. As a result, the computing device generates a marked frame including the marked subject or multiple marked subjects. Afterwards, the computing device may determine an indication related to the marked subject to place an order for the subject. In response to the indication to place the order for the subject, the computing device can collect information included in the order, where the information included in the order includes information about a user and information about the subject, and further transmit, to a third party shopping system, at least a portion of the order. Descriptions herein may refer to one marked subject, but the same operations can be applicable to multiple marked subjects.

In some embodiments, the operations described above can be implemented by one computing device such as a media device, a content server, or by the coordination of multiple devices including a media device, a content server, or other devices. A content server may be referred to as a content server device or a server.

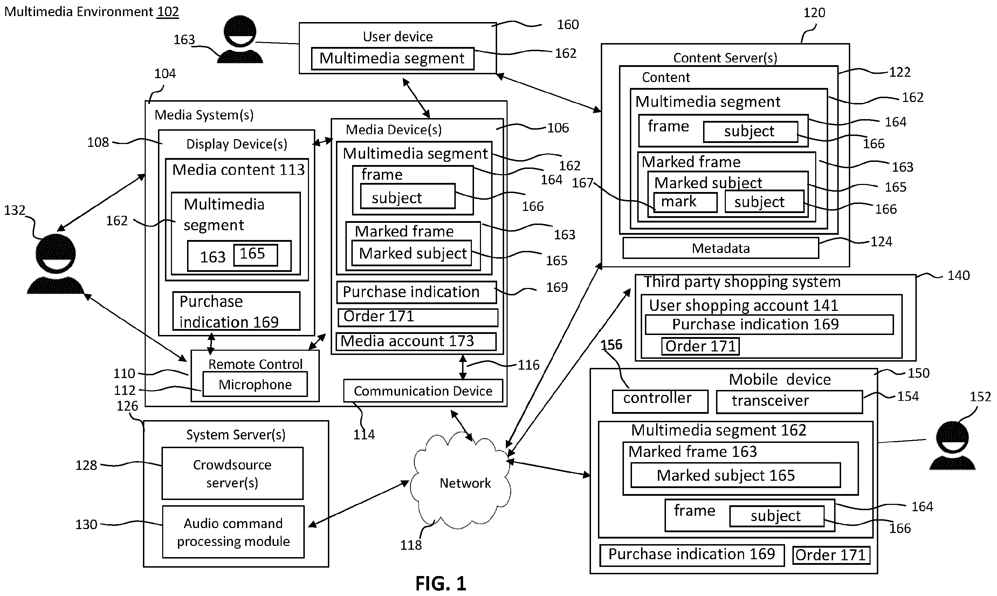

Various embodiments of this disclosure may be implemented using and/or may be part of a multimedia environment 102 shown in FIG. 1. It is noted, however, that multimedia environment 102 is provided solely for illustrative purposes, and is not limiting. Embodiments of this disclosure may be implemented using and/or may be part of environments different from and/or in addition to multimedia environment 102, as will be appreciated by persons skilled in the relevant art(s) based on the teachings contained herein. An example of multimedia environment 102 shall now be described.

### Multimedia Environment

FIG. 1 illustrates a block diagram of multimedia environment 102, according to some embodiments. Multimedia environment 102 illustrates an example environment, architecture, ecosystem, etc., in which various embodiments of this disclosure may be implemented. However, multimedia environment 102 is provided solely for illustrative purposes, and is not limiting. Embodiments of this disclosure may be implemented and/or used in environments different from and/or in addition to multimedia environment 102 of FIG. 1, as will be appreciated by persons skilled in the relevant art(s) based on the teachings contained herein.

In a non-limiting example, multimedia environment 102 may be directed to streaming media. However, this disclosure is applicable to any type of media (instead of or in addition to streaming media), as well as any mechanism, means, protocol, method and/or process for distributing media.

Multimedia environment 102 may include one or more media systems 104. Media system 104 could represent a family room, a kitchen, a backyard, a home theater, a school classroom, a library, a car, a boat, a bus, a plane, a movie theater, a stadium, an auditorium, a park, a bar, a restaurant, or any other location or space where it is desired to receive and play streaming content. User(s) 132 may operate with media system 104 to select and consume content. User 132 may interact with media system 104 through a remote control 110. User 132 may be a viewer, a consumer, or both.

Each media system 104 may include one or more media devices 106 each coupled to one or more display devices 108. Media device 106 may be referred to as a computing device as well. It is noted that terms such as "coupled," "connected to," "attached," "linked," "combined" and similar terms may refer to physical, electrical, magnetic, logical, etc., connections, unless otherwise specified herein.

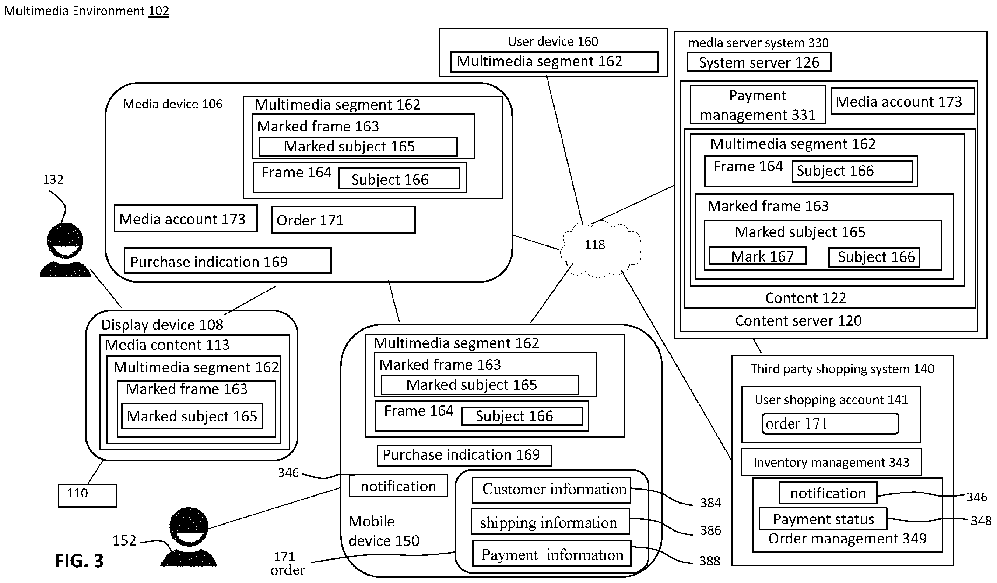

Media device 106 may be a streaming media device, a streaming set-top box (STB), cable and satellite STB, a DVD or BLU-RAY device, an audio/video playback device, cable box, and/or a digital video recording device, to name just a few examples. Display device 108 may be a monitor, a television (TV), a computer, a computer monitor, a smart phone, a tablet, a wearable (such as a watch or glasses), an appliance, an internet of things (IoT) device, and/or a projector, to name just a few examples. In some embodiments, media device 106 can be a part of, integrated with, attached to, operatively coupled to, and/or connected to its respective display device 108. Media device 106 can provide media content 113 to display device 108. In some embodiments, media content 113 can include one or more multimedia segments, such as a multimedia segment 162 that includes a plurality of frames. In addition, media device 106 can provide multimedia segment 162, which may be included in a content channel, to be displayed on display device 108 with more details shown in FIG. 3.

Each media device 106 may be configured to communicate with network 118 via a communication device 114. Communication device 114 may include, for example, a cable modem or over the air or satellite TV transceiver. Media device 106 may communicate with communication device 114 over a link 116, where link 116 may include wireless (such as WiFi) and/or wired connections.

In various embodiments, network 118 can include, without limitation, wired and/or wireless intranet, extranet, Internet, cellular, Bluetooth, infrared, and/or any other short range, long range, local, regional, global communications mechanism, means, approach, protocol and/or network, as well as any combination(s) thereof.

Media system 104 may include remote control 110. Remote control 110 can be any component, part, apparatus and/or method for controlling media device 106, display device 108, such as a remote control, a tablet, laptop computer, smartphone, wearable, on-screen controls, integrated control buttons, audio controls, or any combination thereof, to name just a few examples. In an embodiment, remote control 110 wirelessly communicates with media device 106, or display device 108 using cellular, Bluetooth, infrared, etc., or any combination thereof.

Multimedia environment 102 may include a plurality of content servers 120 (also called content providers). Although only one content server 120 is shown in FIG. 1, in practice the multimedia environment 102 may include any number of content servers 120. Each content server 120 may be configured to communicate with network 118.

Each content server 120 may store content 122 and metadata 124. Content 122 may include any combination of music, videos, movies, TV programs, multimedia, images, still pictures, text, graphics, gaming applications, advertisements, programming content, public service content, government content, local community content, software, and/or any other content or data objects in electronic form. Content 122 may be the source for media content 113 displayed on display device 108. In addition, multimedia segment 162 may be stored as a part of content 122. In some embodiments, multimedia segment 162 can include one or more frames, such as a frame 164. Frame 164 can include one or more subjects, such as a subject 166. Frame 164 and subject 166 may be originally generated by a content generator using a user device 160 or mobile device 150. As such, subject 166 may not contain any advertisement or commercial information initially. In some embodiments, to enable T-commerce or live-commerce, content server 120 can generate a marked subject 165 contained in a marked frame 163 to replace frame 164 to be included in multimedia segment 162. In some embodiments, marked subject 165 can include a mark 167 associated with subject 166, where mark 167 can indicate subject 166 is ready for purchase. In some embodiments, mark 167 can include a graphically visible mark to indicate subject 166 is ready for purchase. Additionally and alternatively, in some embodiments, multimedia segment 162 may be generated by mobile device 150. In addition, frame 162 can be captured by an application software operating on mobile device 150. In some embodiments, marked subject 165 contained in marked frame 163 may be both generated by mobile device 150 or media device 106.

In some embodiments, metadata 124 comprises data about content 122. For example, metadata 124 may include associated or ancillary information indicating or related to writer, director, producer, composer, artist, actor, summary, chapters, production, history, year, trailers, alternate versions, related content, applications, and/or any other information pertaining or relating to content 122. Metadata 124 may also or alternatively include links to any such information pertaining or relating to content 122. Metadata 124 may also or alternatively include one or more indexes of content 122, such as but not limited to a trick mode index.

Multimedia environment 102 may include one or more system servers 126. System servers 126 may operate to support media device 106 from the cloud. It is noted that the structural and functional aspects of system servers 126 may wholly or partially exist in the same or different ones of system servers 126. System servers 126 and content server 120 together may be referred to as a media server system. An overall media system may include a media server system and media system 104. In some embodiments, a media system may refer to the overall media system including the media server system and media system 104.

Media devices 106 may exist in thousands or millions of media systems 104. Accordingly, media devices 106 may lend themselves to crowdsourcing embodiments and, thus, system servers 126 may include one or more crowdsource servers 128.

For example, using information received from media devices 106 in the thousands and millions of media systems 104, crowdsource server(s) 128 may identify similarities and overlaps between closed captioning requests issued by different users 132 watching a particular movie. Based on such information, crowdsource server(s) 128 may determine that turning closed captioning on may enhance users' viewing experience at particular portions of the movie (for example, when the soundtrack of the movie is difficult to hear), and turning closed captioning off may enhance users' viewing experience at other portions of the movie (for example, when displaying closed captioning obstructs critical visual aspects of the movie). Accordingly, crowdsource server(s) 128 may operate to cause closed captioning to be automatically turned on and/or off during future streaming of the movie.

System servers 126 may also include an audio command processing module 130. As noted above, remote control 110 may include a microphone 112. Microphone 112 may receive audio data from user 132 (as well as other sources, such as display device 108). In some embodiments, media device 106 may be audio responsive, and the audio data may represent verbal commands from user 132 to control media device 106 as well as other components in media system 104, such as display device 108.

In some embodiments, the audio data received by microphone 112 in remote control 110 is transferred to media device 106, which is then forwarded to audio command processing module 130 in system servers 126. Audio command processing module 130 may operate to process and analyze the received audio data to recognize a verbal command from user 132. Audio command processing module 130 may then forward the verbal command back to media device 106 for processing.

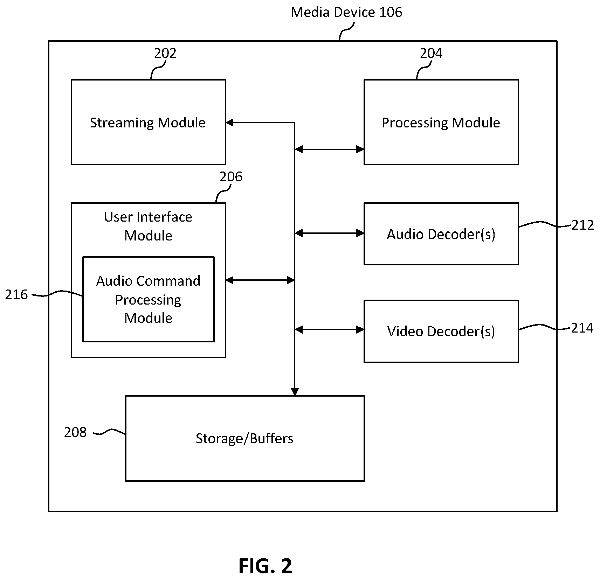

In some embodiments, the audio data may be alternatively or additionally processed and analyzed by an audio command processing module 216 in media device 106 (see FIG. 2). Media device 106 and system servers 126 may then cooperate to pick one of the verbal commands to process (either the verbal command recognized by audio command processing module 130 in system servers 126, or the verbal command recognized by audio command processing module 216 in media device 106).

In some embodiments, multimedia environment 102 may include or coupled to a third party shopping system 140. Third party shopping system 140 may provide advertisement including advertised subject to be displayed on display device 108. Third party shopping system 140 can also receive an order 171 placed by various parties, users, consumers, and transferred from various devices such as media device 106, display device 108, mobile device 150, and record order 171 in a user shopping account 141 managed by third party shopping system 140.

In some embodiments, multimedia environment 102 may include a user device 160 accessed by a user 163, and a mobile device 150 accessed by a user or consumer 152. User 163 may be a company, an advertiser, a content creator, a marketing person that can access user device 160 to upload multimedia segment 162 to be managed by a computing device, e.g., media device 106 or content sever 120. Instead of being a human being, user 163 can be a machine communicating with media device 106 or content sever 120. Multimedia segment 162 can include information for one or more subjects. The computing device, such as media device 106 or content sever 120, can place multimedia segment 162 into a content channel assigned to the user 163, and present the multimedia segment 162 included in the content channel to the mobile device 150 operated by a user or consumer 152.

In some embodiments, a computing device, such as media device 106 or content sever 120, can further receive a consumer input from remote control 110 associated with another device, such as display device 108, a purchase indication 169 related to marked subject 165 included in marked frame 163 to place an order 171 for subject 166. Purchase indication 169 may be simply referred to as an indication as well. In response to indication 169 to place order 171 for subject 166, the computing device can further collect information included in order 171, wherein the information included in order 171 can include information about a user, such as user 132, and information about subject 166. Order 171 may be associated with a media account 173 that is established based on an identification of media device 106. The computing device can further transmit to the third party shopping system 140, at least a portion of order 171 or purchase indication 169.

In some embodiments, the computing device, such as media device 106 or content sever 120, can receive through mobile device 150, purchase indication 169, and place order 171 for subject 166 included in frame 164. In some embodiments, marked frame 163 and marked subject 165 are displayed instead of subject 166 included in frame 164. Purchase indication 169 can be related to marked subject 165 included in marked frame 163 to place order 171 for subject 166. In addition, the computing device, such as media device 106 or content sever 120, can present the multimedia segment 162 included in the content channel to another device, such as display device 108, in synchronization with the presenting the multimedia segment 162 included in the content of the channel to the mobile device 150. Purchase order 171 and purchase indication 169 may be obtained from the coordination of both mobile device 150 and display device 108.

In some embodiments, mobile device 150 can include a transceiver 154 configured to wirelessly communicate with a computing device, and a controller 156 coupled to the transceiver and configured to perform various operations. Communication between mobile device 150 with the computing device such as media device 106 or content sever 120 may be through transceiver 154 and network 118. More details of the operations of user device 160, mobile device 150, and the computing device, such as media device 106 or content sever 120 are shown in FIGS. 3, 4A-4B, and 5.

In some embodiments, mobile device 150 can include a handheld terminal, a cellular phone (e.g., a smart phone), a personal digital assistant (PDA), a wireless modem, a wireless communication device, a handheld device, a laptop, a desktop, a cordless phone, a wireless local loop station, a tablet, a camera, a gaming device, a netbook, an ultrabook, a wearable device (smart watch, smart clothing, smart glasses, smart wrist band, smart jewelry such as smart ring or smart bracelet), an entertainment device (e.g., a music or video device, or a satellite radio), a vehicular component, an Internet-of-Things (IoT) device, a machine-type communication (MTC) device, an evolved or enhanced machine-type communication (eMTC) device, or any other suitable device that is configured to communicate via a wireless medium.

FIG. 2 illustrates a block diagram of an example media device 106, according to some embodiments. Media device 106 may include a streaming module 202, a processing module 204, a storage/buffers 208, and a user interface module 206. As described above, user interface module 206 may include audio command processing module 216.

Media device 106 may also include one or more audio decoders 212 and one or more video decoders 214.

Each audio decoder 212 may be configured to decode audio of one or more audio formats, such as but not limited to AAC, HE-AAC, AC3 (Dolby Digital), EAC3 (Dolby Digital Plus), WMA, WAV, PCM, MP3, OGG GSM, FLAC, AU, AIFF, and/or VOX, to name just some examples.

Similarly, each video decoder 214 may be configured to decode video of one or more video formats, such as but not limited to MP4 (mp4, m4a, m4v, f4v, f4a, m4b, m4r, f4b, mov), 3GP (3gp, 3gp2, 3g2, 3gpp, 3gpp2), OGG (ogg, oga, ogv, ogx), WMV (wmv, wma, asf), WEBM, FLV, AVI, QuickTime, HDV, MXF (OP1a, OP-Atom), MPEG-TS, MPEG-2 PS, MPEG-2 TS, WAV, Broadcast WAV, LXF, GXF, and/or VOB, to name just some examples. Each video decoder 214 may include one or more video codecs, such as but not limited to H.263, H.264, HEV, MPEG1, MPEG2, MPEG-TS, MPEG-4, Theora, 3GP, DV, DVCPRO, DVCPRO, DVCProHD, IMX, XDCAM HD, XDCAM HD422, h.265, AV1, and/or XDCAM EX, to name just some examples.

Now referring to both FIGS. 1 and 2, in some embodiments, user 132 may interact with media device 106 via, for example, remote control 110. For example, user 132 may use remote control 110 to interact with user interface module 206 of media device 106 to select content, such as a movie, TV show, music, book, application, game, etc. Streaming module 202 of media device 106 may request the selected content from content server(s) 120 over network 118. Content server(s) 120 may transmit the requested content to streaming module 202. Media device 106 may transmit the received content to display device 108 for playback to user 132. Mobile device 150 may provide additional control and communication with media device 106 or third party shopping system 140.

In streaming embodiments, streaming module 202 may transmit the content to display device 108 in real time or near real time as it receives such content from content server(s) 120. In non-streaming embodiments, media device 106 may store the content received from content server(s) 120 in storage/buffers 208 for later playback on display device 108.

### Coordination between a media device, a mobile device, and a display device.

FIG. 3 illustrates more details of a part of multimedia environment 102 for placing order 171 for subject 166 included in multimedia segment 162. As described in FIG. 1, multimedia environment 102 includes media systems 104 that includes media device 106, display devices 108, and remote control 110; content server 120 and system server 126 that together can form a media server system 330; third party shopping system 140; user device 160 and mobile device 150. A computing device can include one or more devices of any of the components of multimedia environment 102, such as media device 106 or media server system 330. In some embodiments, media server system 330 can be a system different from third party shopping system 140, for example, owned by different companies or users.

In some embodiments, media device 106 can be associated with media account 173 managed by media server system 330. For example, media account 173 can be saved in content server 120 or media device 106, and media account 173 can uniquely identify media device 106. Media server system 330 may be communicatively coupled to multiple third party shopping systems.

In some embodiments, media device 106 can provide media content 113 to display device 108. Media content 113 can be provided to media device 106 by media server system 330, such as by content server 120. Media content 113 can be provided by media server system 330 according to media account 173 associated with media device 106 managed by media server system 330. In some embodiments, media content 113 can be provided according to subscriptions associated with media account 173.

In some embodiments, media content 113 can be supplied by content 122 of content server 120, and may include multiple multimedia segments such as multimedia segment 162. Multimedia segment 162 can be in various format, such as text, video, audio, or a mixed of some or all of text, video, audio. Multimedia segment 162 can be created before being provided to content server 120 or media device 106 instead of being live streamed. Hence, content of multimedia segment 162 can have more flexibility than being live streamed. Multimedia segment 162 can include information about one or more subjects, such as subject 166 included in frame 164. Subject 166 can be related to a product, an object that is tangible, a service, or anything that can be bought or sold. In some embodiments, multimedia segment 162 can contain only information related to selling one or more subjects. In some other embodiments, multimedia segment 162 can contain normal entertainment content, such as a movie, in addition to information related to selling one or more subjects. When the brand/creator/seller uploads multimedia segment 162, metadata about products or subjects can be embedded into multimedia segment 162.

In some embodiments, multimedia segment 162 may be originally generated by a content generator using a user device 160 or mobile device 150. As such, subject 166 may not contain any advertisement or commercial information initially. In some embodiments, to enable T-commerce or live-commerce, content server 120 can generate a marked subject 165 contained in a marked frame 163 to replace frame 164 to be included in multimedia segment 162. In some embodiments, marked subject 165 can include a mark 167 associated with subject 166, where mark 167 can indicate subject 166 is ready for purchase. In some embodiments, mark 167 can include a graphically visible mark to indicate subject 166 is ready for purchase. In some embodiments, a screen reader can be enabled to notify the existence of mark 167. In some embodiments, mark 167 can be a highlighted boundary of a display area for subject 166. In some embodiments, mark 167 may contain additional information about subject 166, such as the color, the price, the user review, which may be displayed under various conditions, such as when a user points remote control 110 to marked subject 165 being displayed on display device 108.

In some embodiments, content server 120 can replace frame 164 within multimedia segment 162 by marked frame 163 including marked subject 165 having mark 167 associated with subject 166, and further have marked frame 163 being displayed on display device 108 or mobile device 150. User 132 can use remote control 110 to select marked subject 165 being displayed, and send an input as purchase indication 169 related to marked subject 165 included in marked frame 163 to place an order 171 for subject 166. Purchase indication 169 can include an indication of a location of marked subject 165 being selected by the user. For example, user 132 may point remote control 110 to marked subject 165 being displayed on display device 108, and press a * key or any other key to indicate a purchase option for subject 166 associated with marked subject 165. Purchase indication 169 may be simply referred to as an indication as well. In response to indication 169 to place order 171 for subject 166, media device 106 can further collect information included in order 171, where the information included in order 171 can include information about a user, such as user 132, and information about subject 166. Media device 106 can further transmit to the third party shopping system 140, at least a portion of order 171. In some embodiments, order 171 can be recorded in user shopping account 141 managed by the third party shopping system 140. In some embodiments, user shopping account 141 can correspond to media account 173 associated with media device 106.

In some embodiments, the third party shopping system 140, content server 120, media device 106, and mobile device 150 may work together to facilitate a payment for order 171. In some embodiments, payment may be processed based on information associated with media account 173. In some other embodiments, payment may be processed independent of information associated with media account 173. Content server 120 may include a payment management function 331. In some embodiments, the third party shopping system 140 can further include an order management 349 that manages the status of order 171. Order management 349 can include a payment status 348 indicating whether payment for order 171 has been collected successfully. Order management 349 can also send notification 346 to media device 106 or mobile device 150 to indicate that order 171 is placed successfully. Alternatively, the third party shopping system 140 can send notification 346 to indicate that order 171 is not placed successfully if the third party shopping system 140 fails to validate at least the portion of order 171, there is no inventory available based on a determination of inventory management unit 343, or the payment fails to be approved.

Additionally and alternatively, in some embodiments, multimedia segment 162 may be generated by mobile device 150. In addition, frame 164 can be captured by an application software operating on mobile device 150. In some embodiments, marked subject 165 contained in marked frame 163 may be both generated by mobile device 150. User 152 may provide purchase indication 169 through mobile device 150, and collect information related to order 171. In some embodiments, information related to order 171 may include customer information 384, shipping information 386, and payment information 388.

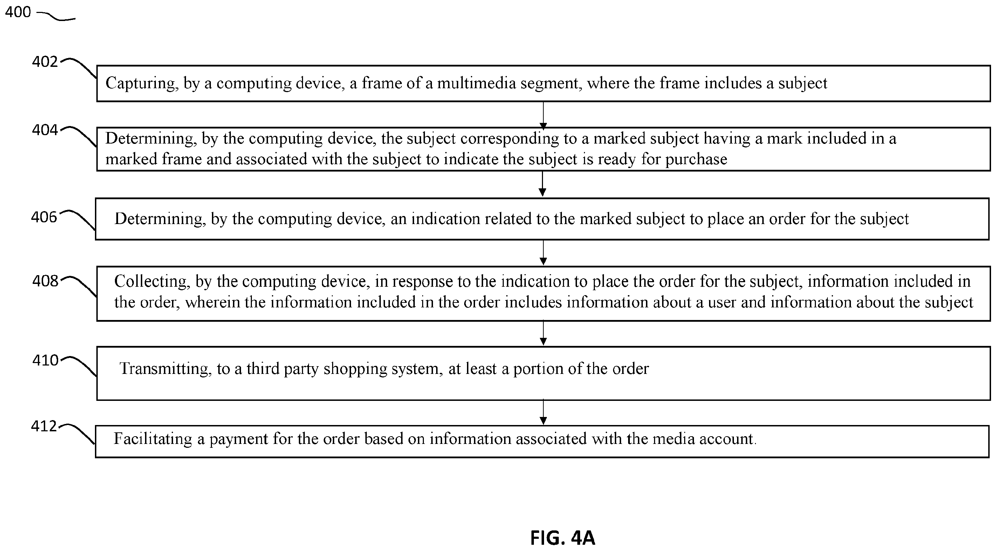

FIGS. 4A-4B illustrate example processes, process 400 and process 420 for placing an order for a subject included in a frame of a multimedia segment, according to some embodiments. In some embodiments, process 400 and process 420 can be performed by a computing device, such as media device 106 or content server 120. Descriptions below may use media device 106 and content server 120 as an example of a computing device. Processes 400 and process 420 can be performed by processing logic that can comprise hardware (e.g., circuitry, dedicated logic, programmable logic, microcode, etc.), software (e.g., instructions executing on a processing device, such as by controller or a processor), or a combination thereof. It is to be appreciated that not all steps may be needed to perform the disclosure provided herein. Further, some of the steps may be performed simultaneously, or in a different order than shown in FIGS. 4A-4B, as will be understood by a person of ordinary skill in the art.

At 402, as shown in FIG. 4A, media device 106 can capture a frame of a multimedia segment, where the frame includes a subject. In some embodiments, mobile device 150 can capture the frame that includes the subject. For example, media device 106 capture frame 164 of multimedia segment 162, where frame 164 includes subject 166. In some embodiments, media device 106 may display live multimedia segment 162 including frame 164 on display device 108 before capturing frame 164. To capture frame 164, user 132 may pause the live displaying of multimedia segment 162 on the display device 108, record a subsequent portion of multimedia segment 162 while frame 164 is being captured, and resume the live displaying of multimedia segment 162 including the recorded subsequent portion of multimedia segment 162. User 132 may use remote control 110 to perform the operations for capturing frame 164. In some embodiments, media device 106 may capture frame 164 before it is displayed on display device 108. Media device 106 may receive frame 164 of multimedia segment 162, and analyze frame 164 to determine that subject 166 included in frame 164 is ready for purchase. In some embodiments, media device 106 may send frame 164 to content sever 120 for performing the analysis to determine that subject 166 included in frame 164 is ready for purchase. Additionally and alternatively, media device 106 may perform the analysis locally to determine that subject 166 included in frame 164 is ready for purchase.

At 404, media device 106 can determine the subject corresponding to a marked subject having a mark included in a marked frame and associated with the subject to indicate the subject is ready for purchase. For example, media device 106 can capture frame 164 including subject 166, and further obtain marked frame 163 including marked subject 165. Subject 164 corresponds to marked subject 165 having mark 167 included in marked frame 163, where mark 167 is associated with subject 166 to indicate subject 166 is ready for purchase. Frame 164 may be captured by media device 106 before it is displayed, and marked frame 163 can be generated before it is displayed. Accordingly, media device 106 can replace frame 164 including subject 166 within multimedia segment 162 by marked frame 163 including marked subject 165 to be displayed on display device 108. In some embodiments, media device 106 can send the captured frame 164 to content server 120; and receive marked frame 163 from content server 120, where marked frame 163 includes marked subject 165 having mark 167 associated with subject 166.

At 406, media device 106 can determine an indication related to the marked subject to place an order for the subject. For example, media device 106 can determine purchase indication 169 related to marked subject 165 to place order 171 for subject 166. Purchase indication 169 may be related to marked subject 165 since marked subject 165 is displayed on display device 108. Purchase order 171 is placed for subject 166.

At 408, in response to the indication to place the order for the subject, media device 106 can collect information included in the order, where the information included in the order includes information about a user and information about the subject. For example, media device 106 can collect information included in order 171, where the information included in order 171 can include information about a user, e.g., customer information 384, and information about subject 166.

At 410, media device 106 can transmit, to a third party shopping system, at least a portion of the order. For example, media device 106 can transmit to the third party shopping system 140 at least a portion of order 171. In some embodiments, media device 106 may launch the third party shopping system 140 by a hyperlink address or a quick response (QR) code received from content server 120. After being launched, the third party shopping system 140 can collect information for order 171.

In some embodiments, subject 166 may be a first subject included in frame 164. Similarly, marked subject 165 can be a first marked subject having a first mark, e.g., mark 167, within marked frame 163. Frame 164 can further include a second subject, not shown, and marked frame 163 can further include a second marked subject corresponding to the second subject. The second marked subject is associated with the second subject to indicate the second subject is ready for purchase. Media device 106 can determine the second marked subject is presented in marked frame 163, and further send marked frame 163 to display device 108 or mobile device 150 for display to a user. The user can select either to purchase the first subject indicated by the first marked subject, or the second object indicated by the second marked subject, and provide a selection signal by remote control 110 or mobile device 150 to media device 106. Media device 106 can further determine, based on the selection signal related to the first marked subject and the second marked subject, a selected subject which is selected from the first subject or the second subject to place an order for purchase. Afterwards, media device 106 can collect information included in the order, where the information included in the order includes information about the user and information about the selected subject.

At 412, media device 106 can facilitate a payment for the order based on information associated with the media account. For example, media device 106 can facilitate a payment for order 171 based on information associated with media account 173. In some embodiments, payment management 331 may collect the payment from the user based on payment information at a time different from the time when order 171 is placed. In addition, payment may be transferred to the third party shopping system 140 from media server system 330 at a different time when payment is collected by media server system 330. For example, payment may be transferred to third party shopping system 140 from media server system 330 once a month, or in other time frequency instead of transferring the payment on each order.

In some embodiments, media device 106 can receive, upon a successful validation of at least the portion of order 171 by the third party shopping system 140, a confirmation from the third party shopping system 140 that the order 171 is placed successfully. In some embodiments, media device 106 can receive the confirmation after the third party shopping system 140 has validated the portion of the order 171, and the subject 166 is in stock provided by the third party shopping system 140. Afterwards, media device 106 can notify the user order 171 is placed successfully by an email or a text message to the user, such as sending a notification 346 to mobile device 150. In some embodiments, media device 106 can receive, upon a failure to validate at least the portion of the order 171 by the third party shopping system 140, an indication that the order 171 is not placed successfully.

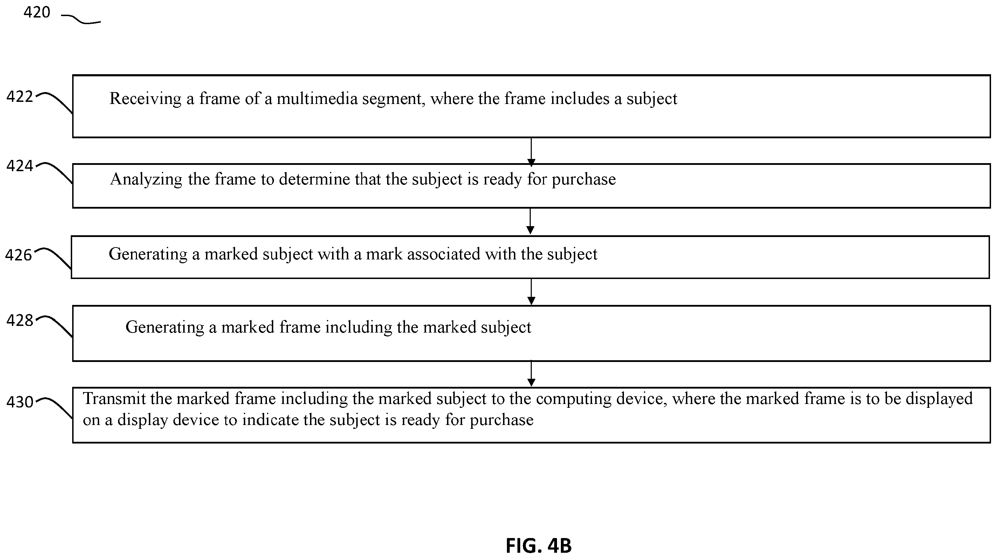

In some embodiments, process 420 shown in FIG. 4B can be performed by content sever 120. In some other embodiments, operations described in process 420 may be performed by other devices, such as media device 106 or mobile device 150, or performed by multiple devices.

At 422, content sever 120 can receive frame 164 of multimedia segment 162, where frame 164 includes subject 166.

At 424, content sever 120 can analyze frame 164 to determine that subject 166 is ready for purchase. Content server 120 may extract information about subject 166 from frame 164, and identify that subject 166 is ready for purchase based on the extracted information and a database storing information related to purchasable subjects. Content server 120 may extract the information about subject 166 by image processing techniques performed on frame 164 to identify the shape, boundary of subject 166, and further match the detected shape or boundary of subject 166 to a database storing information related to purchasable subjects.

At 426, content sever 120 can generate marked subject 165 with mark 167 associated with subject 166. Content sever 120 may detect border location coordinates of an original border of subject 166 within frame 164, and generate as mark 167, at the location coordinates, a highlighted border visibly different from the original border of subject 166.

At 428, content sever 120 can generate marked frame 163 including marked subject 165. Other content of marked frame 163 may be the same as the original frame 164, except replacing subject 166 by marked subject 165.

At 430, content sever 120 can transmit marked frame 163 including marked subject 165 to media device 106, where marked frame 163 is to be displayed on display device 108 to indicate subject 166 is ready for purchase.

There can be other operations performed by content server 120. In some embodiments, content sever 120 can receive, from media device 106, an indication, such as purchase indication 169, for order 171 to purchase subject 166, and further determine one or more third party shopping systems, such as the third party shopping system 140, to fulfill order 171 to purchase subject 166. Content sever 120 can transmit to media device 106, an indication of the one or more third party shopping systems. The indication of the one or more third party shopping systems can include a quick response (QR) code transmitted to the media device.

In some embodiments, subject 166 can be a first subject, marked subject 165 can be a first marked subject having a first mark, and frame 164 can further include a second subject. Content sever 120 can analyze frame 164 to determine that the second subject is ready for purchase, generate a second marked subject with a second mark associated with the second subject, generate marked frame 163 including the second marked subject. Afterwards, content sever 120 can transmit marked frame 163 including the first marked subject and the second marked subject to media device 106, wherein marked frame 163 is to be displayed on display device 108 or mobile device 150 to indicate the second subject is ready for purchase.

### Example Computer System

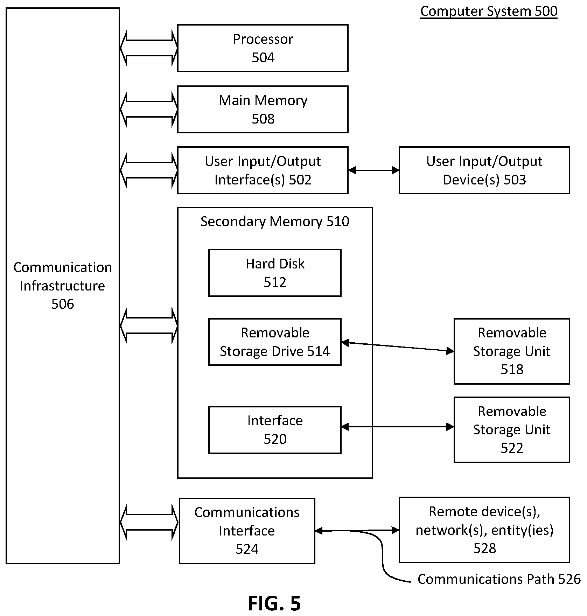

Various embodiments may be implemented, for example, using one or more well-known computer systems, such as computer system 500 shown in FIG. 5. For example, media device 106, display device 108, user device 160, third party shopping system 140, content server 120, system server 126, and mobile device 150, may be implemented using combinations or sub-combinations of computer system 500 to perform various functions described herein, e.g., by process 400 or process 420. Also or alternatively, one or more computer systems 500 may be used, for example, to implement any of the embodiments discussed herein, as well as combinations and sub-combinations thereof.

Computer system 500 may include one or more processors (also called central processing units, or CPUs), such as a processor 504. Processor 504 may be connected to a communication infrastructure or bus 506.

Computer system 500 may also include user input/output device(s) 503, such as monitors, keyboards, pointing devices, etc., which may communicate with communication infrastructure 506 through user input/output interface(s) 502.

One or more of processors 504 may be a graphics processing unit (GPU). In an embodiment, a GPU may be a processor that is a specialized electronic circuit designed to process mathematically intensive applications. The GPU may have a parallel structure that is efficient for parallel processing of large blocks of data, such as mathematically intensive data common to computer graphics applications, images, videos, etc.

Computer system 500 may also include a main or primary memory 508, such as random access memory (RAM). Main memory 508 may include one or more levels of cache. Main memory 508 may have stored therein control logic (i.e., computer software) and/or data.

Computer system 500 may also include one or more secondary storage devices or memory 510. Secondary memory 510 may include, for example, a hard disk drive 512 and/or a removable storage device or drive 514. Removable storage drive 514 may be a floppy disk drive, a magnetic tape drive, a compact disk drive, an optical storage device, tape backup device, and/or any other storage device/drive.

Removable storage drive 514 may interact with a removable storage unit 518. Removable storage unit 518 may include a computer usable or readable storage device having stored thereon computer software (control logic) and/or data. Removable storage unit 518 may be a floppy disk, magnetic tape, compact disk, DVD, optical storage disk, and/ any other computer data storage device. Removable storage drive 514 may read from and/or write to removable storage unit 518.

Secondary memory 510 may include other means, devices, components, instrumentalities or other approaches for allowing computer programs and/or other instructions and/or data to be accessed by computer system 500. Such means, devices, components, instrumentalities or other approaches may include, for example, a removable storage unit 522 and an interface 520. Examples of the removable storage unit 522 and the interface 520 may include a program cartridge and cartridge interface (such as that found in video game devices), a removable memory chip (such as an EPROM or PROM) and associated socket, a memory stick and USB or other port, a memory card and associated memory card slot, and/or any other removable storage unit and associated interface.

Computer system 500 may further include a communication or network interface 524. Communication interface 524 may enable computer system 500 to communicate and interact with any combination of external devices, external networks, external entities, etc. (individually and collectively referenced by reference number 528). For example, communication interface 524 may allow computer system 500 to communicate with external or remote devices 528 over communications path 526, which may be wired and/or wireless (or a combination thereof), and which may include any combination of LANs, WANs, the Internet, etc. Control logic and/or data may be transmitted to and from computer system 500 via communication path 526.

Computer system 500 may also be any of a personal digital assistant (PDA), desktop workstation, laptop or notebook computer, netbook, tablet, smart phone, smart watch or other wearable, appliance, part of the Internet-of-Things, and/or embedded system, to name a few non-limiting examples, or any combination thereof.

Computer system 500 may be a client or server, accessing or hosting any applications and/or data through any delivery paradigm, including but not limited to remote or distributed cloud computing solutions; local or on-premises software ("on-premise" cloud-based solutions); "as a service" models, e.g., content as a service (CaaS), digital content as a service (DCaaS), software as a service (SaaS), managed software as a service (MSaaS), platform as a service (PaaS), desktop as a service (DaaS), framework as a service (FaaS), backend as a service (BaaS), mobile backend as a service (MBaaS), infrastructure as a service (IaaS), etc.); and/or a hybrid model including any combination of the foregoing examples or other services or delivery paradigms.

Any applicable data structures, file formats, and schemas in computer system 500 may be derived from standards including but not limited to JavaScript Object Notation (JSON), Extensible Markup Language (XML), Yet Another Markup Language (YAML), Extensible Hypertext Markup Language (XHTML), Wireless Markup Language (WML), MessagePack, XML User Interface Language (XUL), or any other functionally similar representations alone or in combination. Alternatively, proprietary data structures, formats or schemas may be used, either exclusively or in combination with known or open standards.

In some embodiments, a tangible, non-transitory apparatus or article of manufacture comprising a tangible, non-transitory computer useable or readable medium having control logic (software) stored thereon may also be referred to herein as a computer program product or program storage device. This includes, but is not limited to, computer system 500, main memory 508, secondary memory 510, and removable storage units 518 and 522, as well as tangible articles of manufacture embodying any combination of the foregoing. Such control logic, when executed by one or more data processing devices (such as computer system 500 or processor(s) 504), may cause such data processing devices to operate as described herein.

Based on the teachings contained in this disclosure, it will be apparent to persons skilled in the relevant art(s) how to make and use embodiments of this disclosure using data processing devices, computer systems and/or computer architectures other than that shown in FIG. 5. In particular, embodiments can operate with software, hardware, and/or operating system implementations other than those described herein.

### Conclusion

It is to be appreciated that the Detailed Description section, and not any other section, is intended to be used to interpret the claims. Other sections can set forth one or more but not all exemplary embodiments as contemplated by the inventor(s), and thus, are not intended to limit this disclosure or the appended claims in any way.

While this disclosure describes exemplary embodiments for exemplary fields and applications, it should be understood that the disclosure is not limited thereto. Other embodiments and modifications thereto are possible, within the scope of the appended claims. For example, and without limiting the generality of this paragraph, embodiments are not limited to the software, hardware, firmware, and/or entities illustrated in the figures and/or described herein. Further, embodiments (whether or not explicitly described herein) have significant utility to fields and applications beyond the examples described herein.

Embodiments have been described herein with the aid of functional building blocks illustrating the implementation of specified functions and relationships thereof. The boundaries of these functional building blocks have been arbitrarily defined herein for the convenience of the description. Alternate boundaries can be defined as long as the specified functions and relationships (or equivalents thereof) are appropriately performed. Also, alternative embodiments can perform functional blocks, steps, operations, methods, etc. using orderings different than those described herein.

References herein to "one embodiment," "an embodiment," "an example embodiment," or similar phrases, indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it would be within the knowledge of persons skilled in the relevant art(s) to incorporate such feature, structure, or characteristic into other embodiments whether or not explicitly mentioned or described herein. Additionally, some embodiments can be described using the expression "coupled" and "connected" along with their derivatives. These terms are not necessarily intended as synonyms for each other. For example, some embodiments can be described using the terms "connected" and/or "coupled" to indicate that two or more elements are in direct physical or electrical contact with each other. The term "coupled," however, can also mean that two or more elements are not in direct contact with each other, but yet still co-operate or interact with each other.

The breadth and scope of this disclosure should not be limited by any of the above-described exemplary embodiments, but should be defined only in accordance with the following claims.

## Claims

1. A method, comprising:
capturing, by a computing device, a frame of a multimedia segment, wherein the frame includes a subject;
sending the captured frame of the multimedia segment to a content server;
receiving a marked frame from the content server, wherein the marked frame includes a marked subject having a mark associated with the subject, and wherein the marked frame replaces the captured frame of the multimedia segment, wherein the subject comprises an original border at border location coordinates within the captured frame, wherein the mark comprises, at the location coordinates, a highlighted border visibly different from the original border of the subject;
determining, by the computing device, the subject corresponding to the marked subject having the mark included in a marked frame and associated with the subject to indicate the subject is ready for purchase;
determining, by the computing device, an indication related to the marked subject to place an order for the subject;
collecting, by the computing device, in response to the indication to place the order for the subject, information included in the order, wherein the information included in the order includes information about a user and information about the subject; and
transmitting, to a third party shopping system, at least a portion of the order, wherein the transmitting, to the third party shopping system, at least the portion of the order comprises launching the third party shopping system by a hyperlink address or a Quick Response, QR, code.

2. The method of claim 1, further comprising:
displaying live the multimedia segment including the frame on a display device before capturing the frame of the multimedia segment,
optionally wherein the capturing the frame of the multimedia segment includes:
pausing the live displaying of the multimedia segment on the display device;
recording a subsequent portion of the multimedia segment while the frame of the multimedia segment is being captured; and
resuming the live displaying of the multimedia segment including the recorded subsequent portion of the multimedia segment.

3. The method of claim 1, wherein the mark included in the marked subject includes a graphically visible mark to indicate the subject is ready for purchase.

4. The method of claim 1, wherein the subject is a first subject, the marked subject is a first marked subject having a first mark, the frame further includes a second subject, and the method further comprises:
determining the second subject corresponds to a second marked subject having a second mark included in the marked frame and associated with the second subject to indicate the second subject is ready for purchase;
determining, based on a selection signal related to the first marked subject and the second marked subject, a selected subject which is selected from the first subject or the second subject to place an order for purchase; and
collecting information included in the order, wherein the information included in the order includes information about the user and information about the selected subject.

5. The method of claim 1, wherein the order is recorded in a user shopping account managed by the third party shopping system, wherein the user shopping account corresponds to a media account associated with the computing device,
the method optionally further comprising:
facilitating a payment for the order based on information associated with the media account.

6. The method of claim 1, wherein:
the indication to place the order for the subject includes an indication of a location of the marked subject being selected by the user; and/or
the frame is captured by an application software operating on a mobile device.

7. A content server, comprising:
a communication interface configured to enable communications between the content server and a computing device; and
at least one processor coupled to the communication interface and configured to:
receive a multimedia segment comprising a frame, wherein the frame includes a subject;
analyze the frame to determine that the subject is ready for purchase;
generate a marked subject with a mark associated with the subject, wherein to generate the mark associated with the subject, the at least one processor is configured to:
detect border location coordinates of an original border of the subject within the frame; and
generate as the mark, at the location coordinates, a highlighted border visibly different from the original border of the subject;
generate a marked frame including the marked subject;
replace, in the multimedia segment, the frame with the marked frame;
transmit the multimedia segment comprising the marked frame including the marked subject to the computing device, wherein the marked frame is to be displayed on a display device to indicate the subject is ready for purchase;
receive, from the computing device, an indication for an order to purchase the subject;
determine one or more third party shopping systems to fulfill the order to purchase the subject; and
transmit, to the computing device, an indication of the one or more third party shopping systems, wherein the indication of the one or more third party shopping systems comprises a hyperlink address or a Quick Response, QR, code.

8. The content server of claim 7, wherein to analyze the frame to determine that the subject is ready for purchase, the at least one processor is configured to:
extract information about the subject from the frame;
identify that the subject is ready for purchase based on the extracted information and a database storing information related to purchasable subjects; and
generate the mark associated with the subject to be included in the marked frame.

9. The content server of claim 7, wherein the subject or the marked subject is related to a product, an object that is tangible, a service, or an item that can be bought or sold.

10. The content server of claim 7, wherein the subject is a first subject, the marked subject is a first marked subject having a first mark, the frame further includes a second subject, and the at least one processor is configured to:
analyze the frame to determine that the second subject is ready for purchase;
generate a second marked subject with a second mark associated with the second subject;
generate the marked frame including the second marked subject; and
transmit the multimedia segment comprising the marked frame including the first marked subject and the second marked subject to the computing device, wherein the marked frame is to be displayed on a display device to indicate the second subject is ready for purchase.

11. A non-transitory computer-readable medium having instructions stored thereon that, when executed by at least a computing device, cause the computing device to perform operations comprising:
capturing a frame of a multimedia segment, wherein the frame includes a subject;
sending the captured frame of the multimedia segment to a content server;
receiving a marked frame from the content server, wherein the marked frame includes a marked subject having a mark associated with the subject, and wherein the marked frame replaces the captured frame of the multimedia segment, wherein the subject comprises an original border at border location coordinates within the captured frame, wherein the mark comprises, at the location coordinates, a highlighted border visibly different from the original border of the subject;
determining the subject corresponding to the marked subject having the mark included in a marked frame and associated with the subject to indicate the subject is ready for purchase;
determining an indication related to the marked subject to place an order for the subject;
collecting, in response to the indication to place the order for the subject, information included in the order, wherein the information included in the order includes information about a user and information about the subject; and
transmitting, to a third party shopping system, at least a portion of the order, wherein the transmitting, to the third party shopping system, at least the portion of the order comprises launching the third party shopping system by a hyperlink address or a Quick Response, QR, code.

12. The non-transitory computer-readable medium of claim 11, the operations further comprising:
displaying live the multimedia segment including the frame on a display device before capturing the frame of the multimedia segment,
optionally wherein the capturing the frame of the multimedia segment includes:
pausing the live displaying of the multimedia segment on the display device;
recording a subsequent portion of the multimedia segment while the frame of the multimedia segment is being captured; and
resuming the live displaying of the multimedia segment including the subsequent portion of the recorded multimedia segment.

13. The non-transitory computer-readable medium of claim 11, wherein the mark included in the marked subject includes a graphically visible mark to indicate the subject is ready for purchase.

## Patentansprüche

1. Verfahren, umfassend:
Aufnehmen eines Einzelbilds eines Multimediasegments durch eine Computervorrichtung, wobei das Einzelbild einen Artikel beinhaltet;
Senden des aufgenommenen Einzelbilds des Multimediasegments an einen Content-Server;
Empfangen eines markierten Einzelbilds von dem Content-Server, wobei das markierte Einzelbild einen markierten Artikel mit einer dem Artikel zugeordneten Markierung beinhaltet, und wobei das markierte Einzelbild das aufgenommene Einzelbild des Multimediasegments ersetzt, wobei der Artikel eine ursprüngliche Grenze an Grenzpositionskoordinaten innerhalb des aufgenommenen Einzelbilds umfasst, wobei die Markierung an den Positionskoordinaten eine hervorgehobene Grenze umfasst, die sich sichtbar von der ursprünglichen Grenze des Artikels unterscheidet;
Bestimmen des Artikels, welcher dem markierten Artikel mit der Markierung, die in einem markierten Einzelbild beinhaltet und dem Artikel zugeordnet ist, entspricht, durch die Computervorrichtung, um anzugeben, dass der Artikel bereit zum Kauf ist;
Bestimmen einer Angabe in Bezug auf den markierten Artikel durch die Computervorrichtung, um eine Bestellung für den Artikel aufzugeben;
als Antwort auf die Angabe zum Aufgeben der Bestellung für den Artikel Sammeln von in der Bestellung umfassten Informationen durch die Computervorrichtung, wobei die in der Bestellung umfassten Informationen Informationen über einen Benutzer und Informationen über den Artikel umfassen, und
Übertragen von zumindest einem Teil der Bestellung an ein externes Einkaufssystem, wobei das Übertragen des zumindest einen Teils der Bestellung das Starten des externen Einkaufssystems durch eine Hyperlink-Adresse oder einen Quick-Response-, QR-, Code umfasst.

2. Verfahren nach Anspruch 1, ferner umfassend:
Live-Anzeigen des das Einzelbild umfassenden Multimedia-Segments auf einer Anzeigevorrichtung vor dem Aufnehmen des Einzelbilds des Multimedia-Segments,
wobei das Aufnehmen des Einzelbilds des Multimedia-Segments gegebenenfalls Folgendes umfasst:
Pausieren des Live-Anzeigens des Multimedia-Segments auf der Anzeigevorrichtung;
Aufzeichnen eines darauffolgenden Abschnitts des Multimedia-Segments, während das Einzelbild des Multimedia-Segments aufgenommen wird; und
Wiederaufnehmen des Live-Anzeigens des das Einzelbild umfassenden Multimedia-Segments, einschließlich des aufgezeichneten darauffolgenden Abschnitts des Multimedia-Segments.

3. Verfahren nach Anspruch 1, wobei die in dem markierten Artikel umfasste Markierung eine grafisch sichtbare Markierung zum Anzeigen, dass der Artikel bereit zum Kauf ist, umfasst.

4. Verfahren nach Anspruch 1, wobei der Artikel ein erster Artikel ist, der markierte Artikel ein erster markierter Artikel mit einer ersten Markierung ist, das Einzelbild ferner einen zweiten Artikel beinhaltet und das Verfahren ferner Folgendes umfasst:
Bestimmen, dass der zweite Artikel einem zweiten markierten Artikel mit einer zweiten Markierung, die in dem markierten Einzelbild beinhaltet und dem zweiten Artikel zugeordnet ist, entspricht, um anzuzeigen, dass der zweite Artikel bereit zum Kauf ist;
beruhend auf einem Auswahlsignal in Bezug auf den ersten markierten Artikel und den zweiten markierten Artikel Bestimmen eines ausgewählten Artikels, der aus dem ersten Artikel oder dem zweiten Artikel ausgewählt ist, um eine Kaufbestellung aufzugeben; und
Sammeln von in der Bestellung umfassten Informationen, wobei die in der Bestellung umfassten Informationen Informationen über den Benutzer und Informationen über den ausgewählten Artikel umfassen.

5. Verfahren nach Anspruch 1, wobei die Bestellung in einem von dem externen Einkaufssystem verwalteten Benutzereinkaufskonto verzeichnet wird, wobei das Benutzereinkaufskonto einem der Computervorrichtung zugeordneten Medienkonto entspricht;
wobei das Verfahren gegebenenfalls ferner Folgendes umfasst:
Erleichtern einer Zahlung für die Bestellung basierend auf dem Medienkonto zugeordneten Informationen.

6. Verfahren nach Anspruch 1, wobei:
die Angabe zum Aufgeben der Bestellung für den Artikel eine Angabe eines durch den Benutzer ausgewählten Standorts des markierten Artikels umfasst; und/oder
das Einzelbild durch eine Anwendungssoftware, die auf einem Mobilgerät betrieben wird, aufgenommen wird.

7. Content-Server, umfassend:
eine Kommunikationsschnittstelle, die konfiguriert ist, um Kommunikation zwischen dem Content-Server und einer Computervorrichtung zu ermöglichen; und
zumindest einen Prozessor, der mit der Kommunikationsschnittstelle gekoppelt und für Folgendes konfiguriert ist:
Empfangen eines Multimedia-Segments, das ein Einzelbild umfasst, wobei das Einzelbild einen Artikel beinhaltet;
Analysieren des Einzelbilds, um zu bestimmen, dass der Artikel bereit zum Kauf ist;
Erzeugen eines markierten Artikels mit einer dem Artikel zugeordneten Markierung, wobei der zumindest eine Prozessor zum Erzeugen der dem Artikel zugeordneten Markierung für Folgendes konfiguriert ist:
Detektieren von Grenzpositionskoordinaten einer ursprünglichen Grenze des Artikels innerhalb des Einzelbilds; und
Erzeugen einer hervorgehobenen Grenze an den Positionskoordinaten, die sich von der ursprünglichen Grenze des Artikels sichtbar unterscheidet, als die Markierung;
Erzeugen eines markierten Einzelbilds, welches den markierten Artikel beinhaltet;
Ersetzen des Einzelbilds durch das markierte Einzelbild im Multimedien-Segment;
Übertragen des Multimedia-Segments, welches das, den markierten Artikel beinhaltende, markierte Einzelbild umfasst, an die Computervorrichtung, wobei das markierte Einzelbild auf einer Anzeigevorrichtung anzuzeigen ist, um anzugeben, dass der Artikel bereit zum Kauf ist;
Empfangen einer Angabe von der Computervorrichtung für eine für eine Bestellung zum Kauf des Artikels;
Bestimmen von einem oder mehreren externen Einkaufssystemen, um die Bestellung zum Kauf des Artikels durchzuführen; und
Übertragen einer Angabe des einen oder der mehreren externen Einkaufssysteme an die Computervorrichtung, wobei die Angabe des einen oder der mehreren externen Einkaufssysteme eine Hyperlink-Adresse oder einen Quick-Response-, QR-, Code umfasst.

8. Content-Server nach Anspruch 7, wobei zum Analysieren des Einzelbilds, um zu bestimmen, dass der Artikel bereit zum Kauf ist, der zumindest eine Prozessor für Folgendes konfiguriert ist:
Extrahieren von Informationen über den Artikel aus dem Einzelbild;
Identifizieren, dass der Artikel bereit zum Kauf ist, basierend auf den extrahierten Informationen und einer Datenbank, die Informationen in Bezug auf käufliche Artikel speichert; und
Erzeugen der dem Artikel zugeordneten Markierung, um in dem markierten Einzelbild beinhaltet zu sein.

9. Content-Server nach Anspruch 7, wobei der Artikel oder der markierte Artikel mit einem Produkt, einem greifbaren Gegenstand, einer Dienstleistung oder einer Sache, der/die/das gekauft oder verkauft werden kann, in Verbindung steht.

10. Content-Server nach Anspruch 7, wobei der Artikel ein erster Artikel ist, der markierte Artikel ein erster markierter Artikel mit einer ersten Markierung ist, das Einzelbild ferner einen zweiten Artikel beinhaltet und der zumindest eine Prozessor für Folgendes konfiguriert ist:
Analysieren des Einzelbilds, um zu bestimmen, dass der zweite Artikel bereit zum Kauf ist;
Erzeugen eines zweiten markierten Artikels mit einer dem zweiten Artikel zugeordneten zweiten Markierung;
Erzeugen des markierten Einzelbilds, welches den zweiten markierten Artikel beinhaltet;
Übertragen des Multimedia-Segments, welches das, den ersten markierten Artikel und den zweiten markierten Artikel beinhaltende, markierte Einzelbild umfasst, an die Computervorrichtung, wobei das markierte Einzelbild auf einer Anzeigevorrichtung anzuzeigen ist, um anzugeben, dass der zweite Artikel bereit zum Kauf ist.

11. Nichtflüchtiges computerlesbares Medium, auf dem Befehle gespeichert sind, die, wenn sie durch zumindest eine Computervorrichtung ausgeführt werden, bewirken, dass die Computervorrichtung Vorgänge durchführt, die Folgendes umfassen:
Aufnehmen eines Einzelbilds eines Multimediasegments, wobei das Einzelbild einen Artikel beinhaltet;
Senden des aufgenommenen Einzelbilds des Multimediasegments an einen Content-Server;
Empfangen eines markierten Einzelbilds von dem Content-Server, wobei das markierte Einzelbild einen markierten Artikel mit einer dem Artikel zugeordneten Markierung beinhaltet, und wobei das markierte Einzelbild das aufgenommene Einzelbild des Multimediasegments ersetzt, wobei der Artikel eine ursprüngliche Grenze an Grenzpositionskoordinaten innerhalb des aufgenommenen Einzelbilds umfasst, wobei die Markierung an den Positionskoordinaten eine hervorgehobene Grenze umfasst, die sich sichtbar von der ursprünglichen Grenze des Artikels unterscheidet;
Bestimmen des Artikels, welcher dem markierten Artikel mit der Markierung, die in einem markierten Einzelbild beinhaltet und dem Artikel zugeordnet ist, entspricht, um anzugeben, dass der Artikel bereit zum Kauf ist;
Bestimmen einer Angabe in Bezug auf den markierten Artikel, um eine Bestellung für den Artikel aufzugeben;
als Antwort auf die Angabe zum Aufgeben der Bestellung für den Artikel Sammeln von in der Bestellung umfassten Informationen, wobei die in der Bestellung umfassten Informationen Informationen über einen Benutzer und Informationen über den Artikel umfassen, und
Übertragen von zumindest einem Teil der Bestellung an ein externes Einkaufssystem, wobei das Senden des zumindest einen Teils der Bestellung das Starten des externen Einkaufssystems durch eine Hyperlink-Adresse oder einen Quick-Response-, QR-, Code umfasst.

12. Nichtflüchtiges computerlesbares Medium nach Anspruch 11, wobei die Vorgänge ferner Folgendes umfassen:
Live-Anzeigen des das Einzelbild beinhaltenden Multimedia-Segments auf einer Anzeigevorrichtung vor dem Aufnehmen des Einzelbilds des Multimedia-Segments,
wobei das Aufnehmen des Einzelbilds des Multimedia-Segments gegebenenfalls Folgendes umfasst:
Pausieren des Live-Anzeigens des Multimedia-Segments auf der Anzeigevorrichtung;
Aufzeichnen eines darauffolgenden Abschnitts des Multimedia-Segments, während das Einzelbild des Multimedia-Segments aufgenommen wird; und
Wiederaufnehmen des Live-Anzeigens des das Einzelbild umfassenden Multimedia-Segments, einschließlich des aufgezeichneten darauffolgenden Abschnitts des Multimedia-Segments.

13. Nichtflüchtiges computerlesbares Medium nach Anspruch 11, wobei die in dem markierten Artikel beinhaltete Markierung eine grafisch sichtbare Markierung zum Anzeigen, dass der Artikel bereit zum Kauf ist, beinhaltet.

## Revendications

1. Procédé, comprenant les étapes consistant à :
capturer, par l'intermédiaire d'un dispositif informatique, une trame d'un segment multimédia, dans lequel la trame inclut un sujet ;
envoyer la trame capturée du segment multimédia à un serveur de contenu ;
recevoir une trame marquée en provenance du serveur de contenu, dans lequel la trame marquée inclut un sujet marqué présentant une marque associée au sujet, et dans lequel la trame marquée remplace la trame capturée du segment multimédia, dans lequel le sujet comprend une bordure d'origine au niveau de coordonnées d'emplacement de bordure à l'intérieur de la trame capturée, dans lequel la marque comprend, au niveau des coordonnées d'emplacement, une bordure mise en évidence visiblement différente de la bordure d'origine du sujet ;
déterminer, par l'intermédiaire du dispositif informatique, le sujet correspondant au sujet marqué présentant la marque incluse dans une trame marquée et associée au sujet pour indiquer que le sujet est prêt à l'achat ;
déterminer, par l'intermédiaire du dispositif informatique, une indication relative au sujet marqué pour passer une commande pour le sujet ;
collecter, par l'intermédiaire du dispositif informatique, en réponse à l'indication de passer la commande pour le sujet, des informations incluses dans la commande, dans lequel les informations incluses dans la commande comprennent des informations sur un utilisateur et des informations sur le sujet ; et
transmettre, à un système d'achat tiers, au moins une partie de la commande, dans lequel la transmission, au système d'achat tiers, d'au moins la partie de la commande comprend le lancement du système d'achat tiers par une adresse de lien hypertexte ou un code de réponse rapide, QR.

2. Procédé selon la revendication 1, comprenant en outre l'étape consistant à :
afficher en direct le segment multimédia incluant la trame sur un dispositif d'affichage avant de capturer la trame du segment multimédia, facultativement dans lequel la capture de la trame du segment multimédia inclut les étapes consistant à :
mettre en pause l'affichage en direct du segment multimédia sur le dispositif d'affichage ;
enregistrer une partie ultérieure du segment multimédia pendant que la trame du segment multimédia est capturée ; et
reprendre l'affichage en direct du segment multimédia, incluant la partie ultérieure enregistrée du segment multimédia.

3. Procédé selon la revendication 1, dans lequel la marque incluse dans le sujet marqué inclut une marque graphiquement visible pour indiquer que le sujet est prêt à l'achat.

4. Procédé selon la revendication 1, dans lequel le sujet est un premier sujet, le sujet marqué est un premier sujet marqué présentant une première marque, la trame inclut en outre un second sujet, et le procédé comprend en outre les étapes consistant à :
déterminer que le second sujet correspond à un second sujet marqué présentant une seconde marque incluse dans la trame marquée et associée au second sujet pour indiquer que le second sujet est prêt à l'achat ;
déterminer, sur la base d'un signal de sélection lié au premier sujet marqué et au second sujet marqué, un sujet sélectionné qui est sélectionné parmi le premier sujet ou le second sujet pour passer une commande d'achat ; et
collecter des informations incluses dans la commande, dans lequel les informations incluses dans la commande incluent des informations sur l'utilisateur et des informations sur le sujet sélectionné.

5. Procédé selon la revendication 1, dans lequel la commande est enregistrée dans un compte d'achat d'utilisateur géré par le système d'achat tiers, dans lequel le compte d'achat d'utilisateur correspond à un compte multimédia associé au dispositif informatique,
le procédé comprenant en outre facultativement l'étape consistant à :
faciliter le paiement de la commande sur la base des informations associées au compte multimédia.

6. Procédé selon la revendication 1, dans lequel :
l'indication de passer la commande pour le sujet inclut une indication d'un emplacement du sujet marqué sélectionné par l'utilisateur ; et/ou
la trame est capturée par un logiciel d'application fonctionnant sur un dispositif mobile.

7. Serveur de contenu, comprenant :
une interface de communication configurée pour permettre des communications entre le serveur de contenu et un dispositif informatique ; et
au moins un processeur couplé à l'interface de communication et configuré pour :
recevoir un segment multimédia comprenant une trame, dans lequel la trame inclut un sujet ;
analyser la trame pour déterminer que le sujet est prêt à l'achat ;
générer un sujet marqué avec une marque associée au sujet, dans lequel pour générer la marque associée au sujet, le au moins un processeur est configuré pour :
détecter des coordonnées d'emplacement de bordure d'une bordure d'origine du sujet dans la trame ; et
générer en tant que marque, au niveau des coordonnées d'emplacement, une bordure mise en évidence visiblement différente de la bordure d'origine du sujet ;
générer une trame marquée incluant le sujet marqué ;
remplacer, dans le segment multimédia, la trame par la trame marquée ;
transmettre au dispositif informatique le segment multimédia comprenant la trame marquée comprenant le sujet marqué, dans lequel la trame marquée doit être affichée sur un dispositif d'affichage pour indiquer que le sujet est prêt à l'achat ;
recevoir, en provenance du dispositif informatique, une indication pour une commande d'achat du sujet ;
déterminer un ou plusieurs systèmes d'achat tiers pour exécuter la commande d'achat du sujet ; et
transmettre, au dispositif informatique, une indication des un ou plusieurs systèmes d'achat tiers, dans lequel l'indication des un ou plusieurs systèmes d'achat tiers comprend une adresse de lien hypertexte ou un code de réponse rapide, QR.

8. Serveur de contenu selon la revendication 7, dans lequel pour analyser la trame afin de déterminer que le sujet est prêt à l'achat, le au moins un processeur est configuré pour :
extraire des informations sur le sujet à partir de la trame ;
identifier que le sujet est prêt à l'achat sur la base des informations extraites et d'une base de données stockant des informations relatives aux sujets pouvant être achetés ; et
générer la marque associée au sujet à inclure dans la trame marquée.

9. Serveur de contenu selon la revendication 7, dans lequel le sujet ou le sujet marqué est lié à un produit, un objet qui est tangible, un service ou un article qui peut être acheté ou vendu.

10. Serveur de contenu selon la revendication 7, dans lequel le sujet est un premier sujet, le sujet marqué est un premier sujet marqué présentant une première marque, la trame inclut en outre un second sujet, et le au moins un processeur est configuré pour :
analyser la trame pour déterminer que le second sujet est prêt à l'achat ;
générer un second sujet marqué avec une seconde marque associée au second sujet ;
générer la trame marquée incluant le second sujet marqué ; et
transmettre le segment multimédia comprenant la trame marquée incluant le premier sujet marqué et le second sujet marqué au dispositif informatique, dans lequel la trame marquée doit être affichée sur un dispositif d'affichage pour indiquer que le second sujet est prêt à l'achat.

11. Support lisible par ordinateur non transitoire sur lequel sont stockées des instructions qui, lorsqu'elles sont exécutées par au moins un dispositif informatique, amènent le dispositif informatique à effectuer des opérations comprenant les étapes consistant à :
capturer une trame d'un segment multimédia, dans lequel la trame inclut un sujet ;
envoyer la trame capturée du segment multimédia à un serveur de contenu ;
recevoir une trame marquée en provenance du serveur de contenu, dans lequel la trame marquée inclut un sujet marqué présentant une marque associée au sujet, et dans lequel la trame marquée remplace la trame capturée du segment multimédia, dans lequel le sujet comprend une bordure d'origine au niveau de coordonnées d'emplacement de bordure à l'intérieur de la trame capturée, dans lequel la marque comprend, au niveau des coordonnées d'emplacement, une bordure mise en évidence visiblement différente de la bordure d'origine du sujet ;
déterminer le sujet correspondant au sujet marqué présentant la marque incluse dans une trame marquée et associée au sujet pour indiquer que le sujet est prêt à l'achat ;
déterminer une indication liée au sujet marqué pour passer une commande pour le sujet ;
collecter, en réponse à l'indication de passer la commande pour le sujet, des informations incluses dans la commande, dans lequel les informations incluses dans la commande comprennent des informations sur un utilisateur et des informations sur le sujet ; et
transmettre, à un système d'achat tiers, au moins une partie de la commande, dans lequel la transmission, au système d'achat tiers, d'au moins la partie de la commande comprend le lancement du système d'achat tiers par une adresse de lien hypertexte ou un code de réponse rapide, QR.

12. Support lisible par ordinateur non transitoire selon la revendication 11, les opérations comprenant en outre l'étape consistant à :
afficher en direct le segment multimédia incluant la trame sur un dispositif d'affichage avant de capturer la trame du segment multimédia,
facultativement dans lequel la capture de la trame du segment multimédia inclut :
mettre en pause l'affichage en direct du segment multimédia sur le dispositif d'affichage ;
enregistrer une partie ultérieure du segment multimédia pendant que la trame du segment multimédia est capturée ; et
reprendre l'affichage en direct du segment multimédia, incluant la partie ultérieure du segment multimédia enregistré.

13. Support lisible par ordinateur non transitoire selon la revendication 11, dans lequel la marque incluse dans le sujet marqué inclut une marque visible graphiquement pour indiquer que le sujet est prêt à l'achat.
